Europäisches Patentamt

European Patent Office

Office européen des brevets

(11) Publication number: **0 304 976 B1**

## EUROPEAN PATENT SPECIFICATION

(45) Date of publication of patent specification: **29.04.92**

(51) Int. Cl.⁵: **B60G 1/02**, B60G 9/02, F16C 11/04

(21) Application number: **88201600.9**

(22) Date of filing: **25.07.88**

(54) **Oscillating axle device in particular for use with a wheelset for the transportation of heavy loads.**

(30) Priority: **25.08.87 NL 8701987**

(43) Date of publication of application:
**01.03.89 Bulletin 89/09**

(45) Publication of the grant of the patent:
**29.04.92 Bulletin 92/18**

(84) Designated Contracting States:
**BE DE ES FR GB GR IT NL SE**

(56) References cited:
**DE-A- 2 746 898    DE-B- 2 638 567
DE-C- 906 045    FR-A- 2 568 825
FR-E- 32 334    US-A- 2 198 616
US-A- 3 537 735    US-A- 4 373 739**

(73) Proprietor: **BUISCAR BEHEER B.V.
Kayersdijk 83
NL-7332 AL Apeldoorn(NL)**

(72) Inventor: **Janson, Karel
Valkenberglaan 38
NL-7313 BL Apeldoorn(NL)**

(74) Representative: **Lips, Hendrik Jan George, Ir.
et al
HAAGSCH OCTROOIBUREAU Breitnerlaan
146
NL-2596 HG Den Haag(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(-/2.18/2.0)

## Description

The invention relates to an oscillating axle device comprising an axle being pivotably supported by means of a pin mounted in a U-shaped bracket connected to a frame and fittingly encompassing said axle, both legs of said bracket being provided with a bore coaxial with the bore in the axle for receiving said pin which can be inserted into said bracket, one end of said pin being provided with a screw-thread for fixing the pin in the bracket by means of a nut, said pin having a conically increasing section extending from the screw-thread towards the middle section of said pin by which middle section said axle is supported, said conical section being fittingly received in a corresponding conical bore in one of the legs of said bracket and the pin being pulled tightly into said conical bore by means of said nut.

Such a device is known by US-A-2,198,616 and in particular by the figures 42 and 43 of this. In case of this known device the end of the pin, opposite the end provided with the screw-thread, is threaded to receive the threaded bore of an adjusting collar. This brings with it that primary the pin has to be brought into the part which has to be supported by it, then the conical portion can be inserted into one leg of the bracket and only then the other leg of the bracket can he mounted.

By this the mounting is cumbersome and the U-shaped bracket cannot be formed by one entirely whole so that it will be less stable.

The invention now avoids these disadvantages by providing that the head section of said pin, opposite to said conical section, is having a largest diameter which is slightly larger than the diameter of the middle section of said pin, so that the pin can be inserted into said bracket from one end of it, said head section, seen in longitudinal direction of said pin, being slighty convex, said convex section being supported in a cylindrical bore in the related leg of said bracket, the radius of said convex section being in the range between fifteen and twentyfive times the diameter of said head section.

To further facilitate the mounting of the pin in said bracket a conical section can be present between said head section and said middle section of said pin, the end of said conical section having the smallest diameter being connected to said middle section.

The invention will now be further elucidated by means of an embodiment shown in the drawing, in which:

Fig. 1 shows a perspective view of an oscillating axle device, said axle being provided at both ends with one wheel; and

Fig. 2 schematically shows a cross-section and a view of an oscillating bracket, the axle being supported in it by means of a pin.

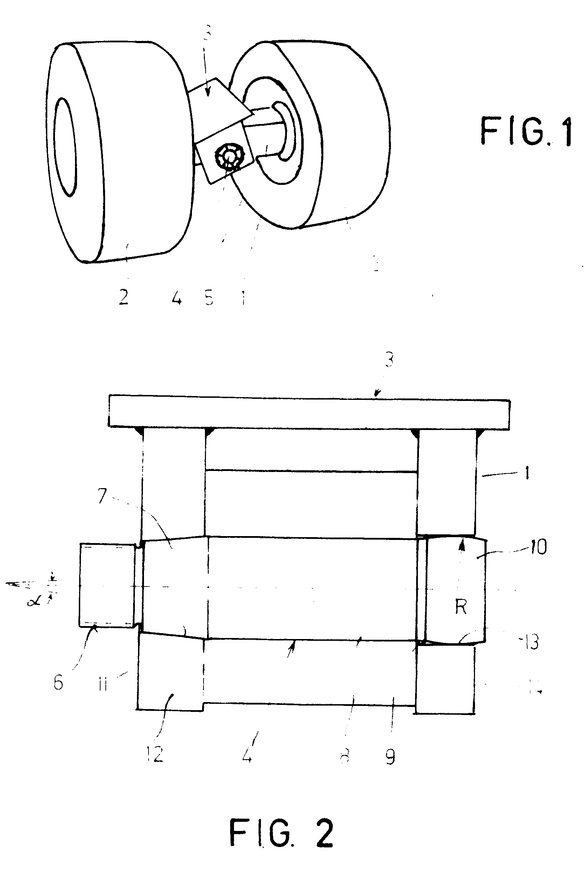

The device shown in Fig. 1 comprises the axle 1 with square cross-section, said axle 1 being provided at each end with a wheel 2 in a not shown way. The axle 1 is supported by means of the bracket 3, which in a manner not further shown is connected to a frame. The axle 1 and the bracket 3 are mutually coupled by means of the pin 4, which is fixed by means of the nut 5.

As appears in particular from Fig. 2, the pin 4 comprises the screw-thread 6, the conical section 7, the middle section 8, the conical section 9 and the head section 10.

The top angle $\alpha$ of the conical section 7 is between 5° and 20° and this section is received into a corresponding conical bore 11 in the leg 12 of the bracket 3. The conical section 7 joins the middle section 8 supporting the wheelaxle 1, said middle section joining the conical section 9 passing into the head section 10 of the pin 4.

The head section 10 is supported in the cylindrical bore 13 in the other leg 14 of the bracket 3, while the head section 10 of the pin 4 is not exactly cylindrical but somewhat convex. The radius R may amount from 15 to 25 times the diameter of the head section 10. This means that the head section 10 is only slightly convex.

Though it is not possible to hold the pin 4 on tightening the nut 5, in practice it appears that this does not create problems because the pin 4 is sufficiently clamped in the bracket 3.

## Claims

1. Oscillating axle device comprising an axle (1) being pivotably supported by means of a pin (4) mounted in a U-shaped bracket (3) connected to a frame and fittingly encompassing said axle (1), both legs (12, 14) of said bracket (3) being provided with a bore (11, 13 resp.) coaxial with the bore in the axle (1) for receiving said pin (4) which can be inserted into said bracket, one end of said pin being provided with a screw-thread (6) for fixing the pin (4) in the bracket (3) by means of a nut (5), said pin (4) having a conically increasing section (7) extending from the screw-thread (6) towards the middle section (8) of said pin by which middle section (8) said axle (1) is supported, said conical section (7) being fittingly received in a corresponding conical bore (11) in one of the legs (12) of said bracket (3) and the pin (4) being pulled tightly into said conical bore (11) by means of said nut (5),
   characterized in
   that the head section (10) of said pin (4), opposite to said conical section (7), is having a largest diameter which is slightly larger than the diameter of the middle section (8) of said pin (4), so that the pin (4) can be inserted into said bracket (3) from one end of it, so that said head section (10), seen in longitudinal direction of said pin (4), being slightly convex, said convex section being supported in a cylindrical bore (13) in the related leg (14) of said bracket (3), the radius of said convex head section being in the range between fifteen and twentyfive times the diameter of said head section (10).

2. Device according to claim 1, characterized in
that a conical section (9) is present between said head section (10) and said middle section (8) of said pin (4), the end of said conical section (9) having the smallest diameter being connected to said middle section (8).

3. Parts for application in the device as described in claim 1 or 2.

**Revendications**

1. Dispositif à essieu oscillant comprenant un essieu (1) monté de façon pivotante sur un axe (4) logé dans un support en forme de U (3) raccordé à un châssis et renfermant étroitement cet essieu, les deux jambes (12, 14) du support (3) étant munies d'un alésage (11, 13 respectivement) coaxial à l'alésage dans l'essieu (1) pour recevoir l'axe (4) qui peut être introduit dans le support, une extrémité de l'axe étant munie d'un filetage (6) pour fixer l'axe (4) dans le support (3) au moyen d'un écrou (5), l'axe (4) ayant une section allant en augmentant coniquement (7) et s'étendant à partir du filetage (6) en direction de la section médiane (8) de l'axe, section médiane (8) par laquelle est supporté l'essieu (1), cette section conique (7) étant étroitement logée dans un alésage conique correspondant (11) dans l'une des jambes (12) du support (3) et l'axe (4) étant amené étroitement dans l'alésage conique (11) au moyen de l'écrou (5), caractérisé en ce que la section de tête (10) de l'axe (4), opposée à la section conique (7) a un plus grand diamètre qui est légèrement supérieur au diamètre de la section médiane (8) de l'axe (4) de sorte que l'axe (4) peut être introduit dans le support (3) à partir d'une de ses extrémités, cette section de tête (10), vue dans la direction longitudinale de l'axe (4) étant légèrement convexe, la section convexe étant supportée dans un alésage cylindrique (13) dans la jambe appropriée (14) du support (3), le rayon de la section de tête convexe se situant dans la plage égale à entre 15 à 25 fois le diamètre de la section de tête (10).

2. Dispositif selon la revendication 1, caractérisé en ce qu'une section conique (9) est prévue entre la section de tête (10) et la section médiane (8) de l'axe (4), l'extrémité de la section conique (9) de plus petit diamètre étant raccordée à la section médiane (8).

3. Pièces ou éléments pour l'application dans le dispositif tel que décrit dans les revendications 1 ou 2.

**Patentansprüche**

1. Schwingende Achsvorrichtung umfassend eine Achse (1) die mittels eines Stiftes (4) verschwenkbar unterstützt wird, der in einer mit einem Rahmen verbundenen und passend um die Achse (1) herum greifenden Stütze (3) angeordnet ist, wobei die beiden Schenkel (12,14) der Stütze (3) mit einer Bohrung (11 bzw.13) koaxial mit der Bohrung in der Achse (1) zur Aufnahme des Stiftes (4) versehen sind, der in die Stütze geschoben werden kann, wobei ein Ende des Stiftes mit Schraubengewinde ( 6) zum Fixieren des Stiftes (4) in der Stütze (3) mittels einer Mutter (5) versehen ist, wobei der Stift (4) einen sich von dem Schraubengewinde (6) ab zu dem Mittelteil (8) des Stiftes hin erstrekkenden, konisch erweiterten Teil (7) aufweist und der genannte Mittelteil (8) die Achse (1) unterstützt, wobei der konische Teil (7) passend in eine entsprechende konische Bohrung (11) in einem der Schenkel (12) der Stütze (3) aufgenommen ist und der Stift (4) mittels einer Mutter (5) fest in die konische Bohrung (11) gezogen wird, **dadurch gekennzeichnet,** dass der Kopfteil (10) des Stiftes (4) gegenüber dem konischen Teil (7) einen grössten Durchmesser aufweist, der etwas grösser als der Durchmesser des Mittelteils (8) des Stiftes (4) ist, so dass der Stift (4) in die Stütze (3) von einem seiner Enden ab geschoben werden kann, wobei der Kopfteil (10), in Längsrichtung des Stiftes (4) gesehen, einigermassen konvex ist und der konvexe Teil in einer zylindrischen Bohrung(13) in dem betreffenden Schenkel (14) der Stütze (3) unterstützt wird, wobei der Strahl des konvexen Kopfteils im Bereich zwischen 15 und 25-mal den Durchmesser des Kopfteils (10) liegt.

2. Vorrichtung nach Anspruch 1, **dadurch gekennzeichnet,** dass ein konischer Teil (9) zwischen dem Kopfteil (10) und dem Mittelteil (8) des Stiftes (4) vorgesehen ist, wobei das Ende des konischen Teiles (9) mit dem kleinsten Durchmesser mit dem Mittelteil (8) verbunden ist.

3. Teile für Anwendung in der Vorrichtung wie diese im Anspruch 1 oder 2 beschrieben ist.

FIG.1

2   4   5   1

FIG. 2